# EUROPÄISCHE PATENTANMELDUNG

(11) **EP 4 568 036 A1**
(43) Veröffentlichungstag der Anmeldung: **11.06.2025**
(21) Anmeldenummer: 24213040.9
(22) Anmeldetag: 14.11.2024
(51) Int. Cl.: H02G 3/32, F16L 3/10, F16B 2/10

(54) **LANGGUTSCHELLE**

(30) Priorität: 06.12.2023 DE 202023107230 U
(71) Anmelder: OBO Bettermann Hungary Kft., 2347 Bugyi (HU)
(72) Erfinder: KARDOS, Gyula, 2040 Budaörs (HU); BODAI, Róbert, 2330 Dunaharaszti (HU)
(74) Vertreter: Haverkamp Patentanwälte PartG mbB

(57) **Zusammenfassung**

Beschrieben ist eine Langgutschelle 1 mit zumindest zwei eine Langgutaufnahme 12 einfassenden, gelenkig miteinander verbundenen Schellensegmenten 2, 3, 4 und mit einem ein gelenkig an einem der Schellensegmente 3 gehaltenes Spannelement 6 umfassenden Spannverschluss 5, wobei das Spannelement 6 bei geschlossener Langgutschelle 1 ein an dem benachbarten Schellensegment 4 befindliches Spannwiderlager hintergreift.

Besonderes Kennzeichen ist, dass die effektive Erstreckung zumindest eines ersten Schellensegmentes 3, 4 oder des Spannelementes 6 in Bezug auf seinen Anteil an dem Außenumfang der Langgutaufnahme 12 einrichtbar ist, wobei die eine Richtung der effektiven Erstreckung des ersten Schellensegmentes gegenüber einem benachbarten zweiten Schellensegment 2, 3 an dem gelenkigen Anschluss, mit dem das erste Schellensegment 3, 4 gelenkig an das benachbarte Schellensegment 2, 3 angeschlossen ist, erfolgt.

## Beschreibung

Die Erfindung betrifft eine Langgutschelle mit zumindest zwei eine Langgutaufnahme einfassenden, gelenkig miteinander verbundenen Schellensegmenten und mit einem ein gelenkig an einem der Schellensegmente gehaltenes Spannelement umfassenden Spannverschluss, wobei das Spannelement bei geschlossener Langgutschelle ein an dem benachbarten Schellensegment befindliches Spannwiderlager hintergreift.

Es gibt zahlreiche Anwendungsfälle, bei denen Langgüter wie Rohe, Schläuche, Leitungen, etwa elektrische Kabel, an einem Befestigungsgrund, etwa wand- oder deckenseitig oder an einer Tragstruktur zu befestigen sind. Eingesetzt werden hierfür Langgutschellen, die bei einer Befestigung bzw. Fixierung von elektrischen Kabeln als Langgüter auch als Kabelschellen bezeichnet werden. Derartige Langgutschellen verfügen über zumindest zwei Schellensegmente, die mit ihren Innenseiten eine Langgutaufnahme einfassen. Die Schellensegmente verfügen zu diesem Zweck, wie beispielsweise aus SE 1651019 A1 bekannt, über eine gekrümmt ausgeführte innere Oberfläche, an die das oder die in der Langgutaufnahme befindlichen Langgüter anliegen. Die beiden Schellensegmente sind gelenkig miteinander verbunden, sodass das eine Schellensegment gegenüber dem anderen Schellensegment aufgeschwenkt und hierdurch die Langgutaufnahme geöffnet bzw. bei geöffneter Langgutaufnahme verschlossen werden kann. Zusätzlich zu den zumindest zwei Schellensegmenten verfügt eine solche Langgutschelle über einen Spannverschluss. Eines der beiden Schellensegmente trägt zu diesem Zweck ein Spannelement, beispielsweise ein Spannhaken, während das andere Schellensegment endseitig ein Spannwiderlager aufweist, welches bei geschlossener Langgutschelle von dem Spannelement des anderen Schellensegmentes hintergriffen ist. Das Spannelement ist an einem ebenfalls von diesem Schellensegment getragenen Spannhebel angeschlossen und durch diesen spannbar. Ein solcher Spannverschluss arbeitet typischerweise nach Art eines Übertotpunktspanners; mithin ist der Spannhebel eines solchen Spannverschlusses in der Geschlossenstellung durch eine Übertotpunktstellung gesichert, wenn die Schellensegmente in radialer Richtung eine Vorspannkraft auf das oder die in der Langgutaufnahme befindlichen Langgüter ausüben.

Wenn Langgüter mit einem vertikalen Verlauf, wie beispielsweise in einem Schacht oder in einem Turm etwa einer Windkraftanlage geführt werden, ist es erforderlich, dass die Schellensegmente mit einer gewissen Vorspannung auf die Mantelfläche des Langgutes wirken, um die Gewichtskraft des Langgutes aufzufangen.

Eine weitere Langgutschelle ist aus EP 3 835 638 A1 bekannt. Diese vorbekannte Langgutschelle verfügt über zumindest zwei Schellensegmente, wobei jedes Schellensegment aus einem Klemmblock aus Kunststoff und einem Klemmblockhalter zusammengesetzt ist. Bei dem Klemmblockhalter handelt es sich um ein eine Klemmblockaufnahme bereitstellendes Blechteil. Der Klemmblock selbst verfügt an seiner in die Langgutaufnahme weisenden Seite über eine konkave Rinne, wobei ihre Querschnittskrümmung an die Krümmung des in der Langgutaufnahme einzulegenden Langgutes angepasst ist. Die beiden Schellensegmente sind zum Öffnen und Schlie-ßen der Langgutaufnahme gelenkig aneinander angeschlossen. Ein Übertotpunktspannverschluss dient zum Verschließen der Langgutaufnahme und zum Verspannen eines darin eingelegten Langgutes. Mit diesem vorbekannten Konzept kann auch eine Langgutschelle mit einer Langgutaufnahme bereitgestellt werden, in der drei Langgüter, beispielsweise drei elektrische Kabel, positioniert und miteinander verspannt an einem Befestigungsgrund festgelegt werden können. Bei einer solchen Ausgestaltung trägt eines der beiden Schellensegmente zwei Klemmblöcke. Das andere Schellensegment trägt gegen nur einen Klemmblock. Die Klemmblöcke sind bei einer solchen Ausgestaltung nach Art eines Prismas mit trapezförmigen Grundflächen ausgebildet.

Die vorstehend genannten Langgutschellen sind in Bezug auf die Innenkontur der Lageraufnahme an die Umfangskrümmung des oder der darin aufzunehmenden Langgüter angepasst. Dieses ist gewünscht, um einen möglichst großflächigen Kontakt zwischen den Klemmblöcken und der Mantelfläche des bzw. der in die Lageraufnahme eingelegten Langgüter zu haben.

Dieses erfolgt bei der Langgutschelle gemäß EP 3 835 638 A1 durch Einsetzen entsprechender Klemmblöcke, die an ihrer Innenseite eine Rinne mit dem jeweils gewünschten, an den Radius der Mantelfläche eines Langgutes angepassten Radius aufweisen. Dieses Konzept hat zur Folge, dass für unterschiedliche Anwendungen, das heißt: Für im Durchmesser unterschiedlich große Langgüter und/oder bei einer gewünschten Befestigung von mehreren Langgütern in einer Langgutschelle für unterschiedliche Anwendungsfälle unterschiedlich ausgelegte Langgutschellen vorhanden sein müssen. Vor diesem Hintergrund wäre es wünschenswert, wenn eine Langgutschelle zur Verfügung stehen würde, die vor Ort und nach Möglichkeit werkzeuglos an die jeweiligen Montageerfordernisse angepasst werden kann, auch um eine für eine in vertikaler Richtung verlaufende Langgutverlegung hinreichende Spannkraft auf die Mantelfläche des oder der in der Langgutaufnahme zu haltenden Langgüter aufbringen zu können. Mithin besteht der Wunsch nach einer Universallanggutschelle, mit der ein relativ großer Langgutaufnahmevolumenbereich (Querschnittsfläche der Langgutaufnahme) abgedeckt ist.

Somit liegt ausgehend von dem vorstehend diskutierten Stand der Technik der Erfindung die Aufgabe zu Grunde, eine solche Langgutschelle vorzuschlagen.

Gelöst wird diese Aufgabe erfindungsgemäß durch eine eingangs genannte, gattungsgemäße Langgutschelle, bei der die effektive Erstreckung zumindest eines ersten Schellensegmentes oder des Spannelementes in Bezug auf seinen Anteil an dem Außenumfang der Langgutaufnahme einrichtbar ist, wobei die Einrichtung der effektiven Erstreckung des ersten Schellensegmentes gegenüber einem benachbarten zweiten Schellensegment an dem gelenkigen Anschluss, mit dem das erste Schellensegment gelenkig an das benachbarte Schellensegment angeschlossen ist, erfolgt.

Bei dieser Langgutschelle ist die effektive Erstreckung zumindest eines Schellensegments oder des Spannelementes gegenüber einem benachbarten Schellensegment einrichtbar. Die effektive Erstreckung eines solchen Schellensegmentes ist diejenige Erstreckung, die dieses Schellensegment in Bezug auf seinen Anteil am Außenumfang der Langgutaufnahme hat. Damit ist die effektive Erstreckung eines solchen Schellensegmentes derjenige Anteil dieses Schellensegmentes, mit dem dieses Schellensegment die Langgutaufnahme in radialer Richtung nach außen begrenzt. Die Langgutaufnahme wird in dieser Richtung durch die Schellensegmente und in aller Regel auch durch das den Abstand zweier benachbarter Schellensegmente überbrückende Spannelement eingefasst. Durch die Einrichtbarkeit der effektiven Erstreckung eines solchen ersten Schellensegmentes gegenüber dem oder einem benachbarten zweiten Schellensegment ist somit seine sich in Umfangsrichtung erstreckende Länge einrichtbar. Mithin kann auf diese Weise der Umfang der Langgutaufnahme und damit die ihre Querschnittsfläche bzw. das Aufnahmevolumen in dem Maße der Einrichtbarkeit der effektiven Erstreckung größer oder kleiner eingerichtet werden. Die Einrichtbarkeit eines solchen Schellensegmentes gegenüber einem benachbarten Schellensegment erfolgt an dem gelenkigen Anschluss, mit dem dieses hinsichtlich seiner effektiven Erstreckung einrichtbare erste Schellensegment an sein benachbartes Schellensegment als zweites Schnellsegment angeschlossen ist. Dieses hat zum Vorteil, dass der gelenkige Anschluss der beiden Schellensegmente, wobei die Schwenkachse parallel zur Längsachse der Langgutaufnahme verläuft, nicht nur zum Öffnen und Schließen der Langgutaufnahme durch entsprechendes Verschwenken dieser Schellensegmente gegeneinander genutzt werden kann, sondern zugleich auch im Zusammenhang mit einer Vergrößerung oder Reduzierung seiner effektiven Erstreckung. Bei einer Vergrößerung oder einer Reduzierung der effektiven Erstreckung eines solchen Schellensegmentes ergibt sich bei geschlossener Langgutschelle eine unterschiedliche winklige Anordnung eines solchen Schellensegmentes zu dem gelenkig daran angeschlossenen weiteren Schellensegment. Mit kleiner werdendem Langgutaufnahmevolumen und somit bei einer kürzeren effektiven Erstreckung eines solchen Schellensegmentes dürfte der von den beiden Schellensegmenten im Bereich ihrer gelenkigen Anbindung eingeschlossene Winkel kleiner sein als bei einer Einrichtung des hinsichtlich seiner effektiven Erstreckung einrichtbaren Schellensegmentes mit einer längeren Erstreckung. Überdies kann durch den gelenkigen Anschluss und die Einrichtbarkeit der effektiven Erstreckung zumindest in gewissem Maße eine Anpassung der Schellensegmentinnengeometrie und damit der Verlauf seiner in die Langgutaufnahme weisenden Innenseite an die Außenkontur des oder der in der Langgutaufnahme zu haltenden Langgüter vorgenommen werden. Das Vorstehende gilt gleichermaßen für das Spannelement des Spannverschlusses, durch das zwei, die Einlegeöffnung der Langgutaufnahme begrenzende Schellensegmente bei geschlossener Langgutschelle miteinander verbunden sind.

Gemäß einem Ausführungsbeispiel zum Ausführen der Einrichtung der effektiven Erstreckung eines Schellensegmentes oder des Spannelementes gegenüber dem daran angeschlossenen benachbarten Schellensegment ist vorgesehen, dass das benachbarte Schellensegment für den vorgesehenen gelenkigen Anschluss ein um seine Längsachse verstellbares Gelenkstück hält. Bei diesem handelt es sich typischerweise um ein Gelenkstück mit einer zylindrischen Mantelfläche. Das Gelenkstück selbst kann als Gelenkstab oder als Gelenkhülse ausgebildet sein. Dieses Gelenkstück verfügt über eine quer zu seiner die Schwenkachse bereitstellenden Längsachse angeordnete Anschlussdurchbrechung, und zwar für den Anschluss des anderen Schellensegmentes. Für den Anschluss des anderen Schellensegmentes an dieses um seine Längsachse verstellbare Gelenkstück verfügt das andere Schellensegment bzw. das Spannelement über wenigstens einen Anschlussstift. Ein solcher Anschlussstift durchgreift die Anschlussdurchbrechung des Gelenkstückes. Dieser ist typischerweise gerade ausgeführt. Gleichwohl ist auch eine gekrümmte Ausgestaltung durchaus möglich. Zum Einrichten der effektiven Erstreckung des den Anschlussstift tragenden Teils - des Schellensegmentes oder des Spannelementes - ist ein Einrichtungsmechanismus vorgesehen, durch den die Auszugsbewegung des Anschlussstiftes aus der Anschlussdurchbrechung blockierbar ist. Dabei ist in einem bevorzugten Ausführungsbeispiel vorgesehen, durch den Einrichtungsmechanismus nur die eine Auszugsbewegung des Anschlussstiftes zu blockieren, mithin eine Bewegung zum Vergrößern der effektiven Erstreckung. Hierbei macht man sich den Umstand zu Nutze, dass bei gespannten Spannverschluss und somit bei geschlossener Langgutschelle auf den Anschlussstift eine Zugkraft wirkt und daher nur eine Blockierung dieser Bewegungsrichtung des Anschlussstiftes in der Anschlussdurchbrechung zum Ausüben einer in einer radialen Richtung wirkenden Vorspannung durch die Schellensegmente auf die Mantelfläche eines in die Langgutaufnahme eingelegten Langgutes erforderlich ist. Eine solche Auslegung der Langgutschelle hat auch zum Vorteil, dass eine Einrichtung der effektiven Erstreckung des einen Schellensegmentes hinsichtlich einer Reduzierung derselben ohne Weiteres durch weiteres Einschieben bzw. Eindrücken des Anschlussstiftes in die Anschlussdurchbrechung erfolgen kann, realisierbar beispielsweise durch eine entsprechende Entlastung.

Vorzugsweise ist der Einrichtungsmechanismus nach Art einer Rastverriegelung ausgelegt. Eine solche Rastverriegelung, durch die die Auszugslänge des Anschlussstiftes aus der Anschlussdurchbrechung in einer bestimmten Stellung blockierbar ist, kann unterschiedlich ausgelegt sein. Gemäß einem Ausführungsbeispiel trägt der Anschlussstift an seiner Mantelfläche ein sich in Richtung seiner Längserstreckung erstreckende Rastzahnreihe. Eine Blockierung kann somit an jeder Zahnposition entlang der Rastzahnreihe vorgenommen werden. Die Rastzähne einer solchen Rastzahnreihe sind typischerweise asymmetrisch ausgeführt, und zwar dergestalt, dass die flache Flanke in Einsteckrichtung und die steile Flanke entgegen der Einsteckrichtung und damit in Auszugsrichtung weist. Ein solcher Einrichtungsmechanismus verfügt ferner über ein Sperrglied, welches in seiner Sperrstellung in eine Zwischenzahnstellung eingreift. Ein solches Sperrglied verfügt über eine Eingriffskontur, mit der dieses, mit der Rastzahnreihe in Eingriff gestellt, an der kurzen Flanke eines Rastzahnes der Rastzahnreihe abgestützt ist und dadurch eine Auszugsbewegung des die Anschlussdurchbrechung durchgreifenden Anschlussstiftes blockiert.

Auch wenn ein solches Sperrglied grundsätzlich in Bezug auf die Langgutaufnahme außenseitig benachbart zu dem Gelenkstück angeordnet sein kann, ist in einem bevorzugten Ausführungsbeispiel vorgesehen, das Gelenkstück als Gelenkhülse auszuführen und das Sperrglied innerhalb der Gelenkhülse anzuordnen. Dieses spart Raum. Zugleich ist durch die Gelenkhülse die notwendige Führung für das Sperrglied bereitgestellt. Auch werden hierfür weniger Teile zum Realisieren der Langgutschelle benötigt. Bei einer solchen Ausgestaltung wird das Hülseninnere genutzt, um darin ein Federelement oder eine Federelementanordnung unterzubringen, durch das oder die das Sperrglied in seiner Eingriffstellung in die Rastzahnreihe gehalten ist. Zum Lösen dieser eine Ausziehbewegung des Anschlussstiftes aus der Anschlussdurchbrechung blockierenden Stellung durch das Sperrglied dient ein Stellglied, mit dem das Sperrglied gegen die Rückstellkraft des Federelementes bzw. des Federpaktes aus seiner in Eingriffstellung in die Rastzahnreihe herausgedrückt werden kann. Ein solches Stellglied kann an das Sperrglied als Fortsatz angeformt sein. Dann verfügt dieses Sperr-Stell-Glied über eine langlochartige Durchbrechung, deren Langachse der Längserstreckung des Gelenkstückes folgt, sodass die in axialer Richtung des Gelenkstückes verlaufende Verschiebebewegung durch Eindrücken des Stellgliedes vorgenommen werden kann. Dieses ragt bei Verwendung einer Gelenkhülse als Gelenkstück aus der Stirnseite der Gelenkhülse heraus.

In einem bevorzugten Ausführungsbeispiel ist vorgesehen, dass ein solches Schellensegment nicht nur einen Anschlussstift trägt, sondern zwei parallel zueinander angeordnete Anschlussstifte. Dementsprechend verfügt das Gelenkstück auch über zwei im Abstand der Anschlussstifte zueinander beabstandete Anschlussdurchbrechungen. Bei einer solchen Auslegung dieses Schellensegmentes und seiner gelenkigen Anbindung an das benachbarte, gelenkig daran angeschlossene Schellensegment ist vorzugsweise vorgesehen, den Einrichtungsmechanismus so auszulegen, dass beide, jeweils eine Anschlussdurchbrechung durchgreifende Anschlussstifte hinsichtlich ihrer Auszugsbewegung aus den Anschlussdurchbrechungen blockierbar sind. Bei einer Auslegung des Gelenkstückes als Gelenkhülse befinden sich somit innerhalb der Gelenkhülse zwei Sperrglieder, zwischen denen ein Federelement oder ein Federelementpaket angeordnet ist, wobei jedes Sperrglied mit der Rastzahnreihe eines der beiden Anschlussstifte in Eingriff stellbar ist. Dementsprechend verfügt ein solcher Einrichtungsmechanismus auch über zwei Stellglieder zum Aufheben der Auszugsblockierung. Durch die beiden Anschlussstifte ist eine Einrichtung der effektiven Erstreckung stabiler. Zudem wird aufgrund der Beabstandung der Abstandsstifte in Längserstreckung der Langgutaufnahme ein darin befindliches Langgut durch dieses Schellensegment an mehreren Abschnitten seiner Mantelfläche kontaktiert.

Bei einer solchen Ausgestaltung des bezüglich seiner effektiven Erstreckung einrichtbaren Schellensegmentes ist bevorzugt vorgesehen, die beiden Anschlussstifte als Schenkel eines U-förmig geformten, ersten Schellensegmentteils auszubilden. Der die beiden Anschlussstifte verbindende Steg eines solchen Schellensegmentteils ist um seine Längsachse verstellbar an einem zweiten Schellensegmentteil dieses Schellensegmentes gehalten. Dieses erlaubt nicht nur eine einfache Herstellung des die Anschlussstifte bereitstellenden Schellensegmentteils, sondern erlaubt zudem die Ausbildung einer gelenkigen Verbindung der beiden Schellensegmentteile. Dieses wiederum erlaubt eine bessere Anpassung an die Umfangskontur eines oder auch mehrerer in die Langgutaufnahme aufgenommenen Langgüter. Ein solcher die beiden Anschlussstifte verbindender Steg kann als Lagersteg an einer Schwenklagerfläche des anderen Schellensegmentteils geführt sein. Die Schwenklagerfläche wird typischerweise durch eine schlaufenartige Umbiegung des zweiten Schellenelementteils bereitgestellt. Zugleich wird bei einer solchen Auslegung dieses Schellensegmentteils ein sich in Umfangserstreckung erstreckender Abschnitt doppellagig sein. Genutzt werden kann dieses für verschiedene Zwecke. Die innere, zur Langgutaufnahme weisende Lage ist typischerweise zur Anpassung an ein oder mehrere daran aufzunehmende Langgüter in Umfangsrichtung der Langgutschelle konvex gekrümmt.

Die Doppellagigkeit in der Ausbildung eines Schellensegmentteiles eines Schellensegmentes kann genutzt werden, um die äußere Lage der Doppellagigkeit gerade und damit im Unterscheid zur inneren Lage der Doppellagigkeit nicht gekrümmt auszuführen. Die Doppellagigkeit kann genutzt werden, um beispielsweise ein stabileres Schwenklager für einen dem Spannverschluss zugehörigen Spannhebel bereitzustellen, da unter Beteiligung von beiden Lagen ein solches Spannlager ausgebildet werden kann. In gleicher Weise kann die Doppellagigkeit eines solchen zweiten Schellensegmentteils zur Ausbildung des Spannwiderlagers, beispielsweise als Spannhaken ausgeführt, dienen. Da die Spannhaken zum Schließen bzw. Spannen der Langgutschelle von einem Spannelement hintergriffen sind und ein solcher Haken durch jeweils einen Abschnitt jeder Lage der Doppellagigkeit dieses Schellensegmentteiles, mithin hierdurch ein Spannhakenpaar bereitgestellt ist, kann bei entsprechender Auslegung dieses zweiten Schellensegmentteils durch das Spannen Sorge dafür getragen werden, dass die Kontaktflächen der beiden ein Spannhakenpaar bildenden Spannhaken in eine fluchtende Anordnung gelangen, wenn durch das Spannen der Langgutschelle eine Spannkraft auf das oder die innerhalb der Langgutaufnahmen befindlichen Langgüter ausgeübt wird. Dieses setzt voraus, dass bei geöffneter Langgutschelle diese Spannhakenkontaktflächen nicht in einer fluchtenden Anordnung zueinander stehen. Insofern wird die Doppellagigkeit bei einer solchen Ausgestaltung genutzt, um in Spannrichtung die beiden Lagen zueinander in einem gewissen Maße einzurichten. Je nach Auslegung können durch Spannen des Spannverschlusses in einem ersten Spannschritt die Kontaktflächen der Haken in eine fluchtende Anordnung gebracht werden, bevor die eigentliche Spannkraft auf das oder die innerhalb der Langgutaufnahme befindlichen Langgüter ausgeübt wird. Dieser Übergang zwischen den beiden Spannstufen ist haptisch spürbar. Insofern kann eine Kontrolle der auf das oder die in der Langgutaufnahme befindlichen Langgüter erforderlichen Spannkraft dadurch erfolgen, dass beim Schließen des Spannverschlusses eine solche Zweistufigkeit haptisch bemerkt wird. Ist die auf das oder die in der Langgutaufnahme befindlichen Langgüter bewirkte Spannkraft zu gering, wird man diese Zweistufigkeit im Spannvorgang haptisch nicht feststellen können. Gleichermaßen kann eine solche Auslegung der Langgutschelle auch so vorgenommen werden, dass in einem ersten Schritt die notwendige Spannkraft aus in der Langgutaufnahme befindliche Langgut gebracht und anschließend die beiden Lagen in der vorbeschriebenen Art und Weise zueinander eingerichtet werden. Auch hierbei ist der Übergang zwischen den beiden Spannstufen haptisch spürbar.

Die vorbeschriebene Doppellagigkeit des das Spannwiderlager bildenden Schellensegmentteils kann auch genutzt werden, um durch die relative Bewegung der beiden Lagen zueinander in Spannrichtung eine Raste auszubilden, die schließt, wenn die gewünschte Spannkraft aufgebracht ist. Ein solches Einrasten der beiden komplementären Rastelemente ist ebenfalls haptisch spürbar.

In einer bevorzugten Ausgestaltung verfügt eine solche Langgutschelle über drei Schellensegmente, von denen eines ein Basiselement ist. Dieses Basiselement weist beispielsweise eine trapezförmige Querschnittsprofilierung auf. An den beiden in Umfangsrichtung der Langgutaufnahme weisenden Enden ist jeweils ein Schellensegment gelenkig angeschlossen. Vorzugsweise sind beide daran angeschlossenen Schellensegmente hinsichtlich ihrer effektiven Erstreckung einrichtbar.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht einer Langgutschelle gemäß der Erfindung,
- **Fig. 2:**: Eine Seitenansicht der Langgutschelle der Figur 1,
- **Fig. 3:**: Eine perspektivische Explosionsdarstellung der Langgutschelle der vorstehenden Figuren,
- **Fig. 4a, 4b:**: Einen Teilschnittdarstellung durch den Anschluss eines einem Spannverschluss der Langgutschelle zugehörigen Spannelementes in der Schnittlinie A - A der Figur 2 zum Darstellen eines Einrichtungsmechanismus in einer eine Auszugsbewegung blockierenden Stellung (Figur 4a) und mit einer eine Auszugsbewegung freigebenden Stellung (Figur 4b),
- **Fig. 5:**: Eine perspektivische Teilansicht der Langgutschelle der Figur 1 aus einer anderen Perspektive und
- **Fig 6:**: Eine weitere perspektivische Darstellung einer Langgutschelle der vorstehenden Figuren in noch einer weiteren Perspektive.

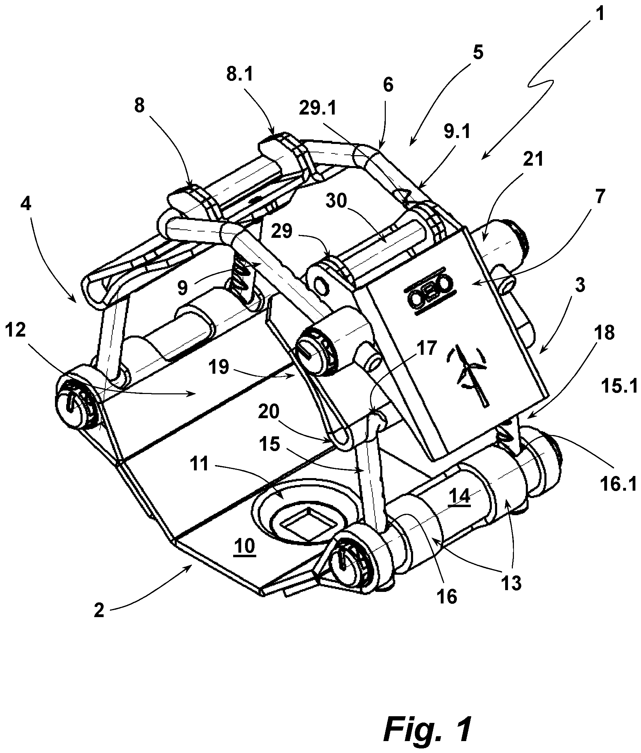

Eine Langgutschelle 1 dient zum Befestigen eines oder mehrerer Langgüter an einem Befestigungsgrund, beispielsweise einer Schachtwand oder in einem Turm einer Windkraftanlage. Die in dem dargestellten Ausführungsbeispiel dargestellte Langgutschelle 1 verfügt über drei Schellensegmente, 2, 3, 4 und über einen insgesamt mit dem Bezugszeichen 5 kenntlich gemachten Spannverschluss. Der Spannverschluss 5 umfasst ein bei dem dargestellten Ausführungsbeispiel bügelartig ausgeführtes Spannelement 6, einen Spannhebel 7 sowie ein durch zwei Spannhakenpaare 8, 8.1 bereitgestelltes Spannwiderlager. Die Spannhakenpaare 8, 8.1 sind dem Schellensegment 4 zugehörig, während das Spannelement 6 und der Spannhebel 7 dem Schellensegment 3 zugehörig sind. Figur 1 zeigt die Langgutschelle 1 in ihrer geschlossenen, gespannten Stellung. Das Spannelement 6 überbrückt mit seinen beiden Schenkeln 9, 9.1 den Öffnungsabstand der beiden zueinander weisenden Enden der Schellensegmente 3, 4. Bei dem Schellensegment 2 handelt es sich um ein Basissegment, welches bei dem dargestellten Ausführungsbeispiel eine trapezförmige Querschnittsgeometrie aufweist. Das Schellensegment 2 als Basissegment ist aus einer Stahlblechplatine als Stanz-Biege-Teil hergestellt. In die Bodenplatte 10 des Schellensegmentes 2 ist eine Schraubenkopfaufnahme 11 mit einer Durchbrechung eingeprägt. Mittels eines die Öffnung durchgreifenden Schraubbefestigers ist die Langgutschelle 1 an einem Befestigungsgrund befestigbar.

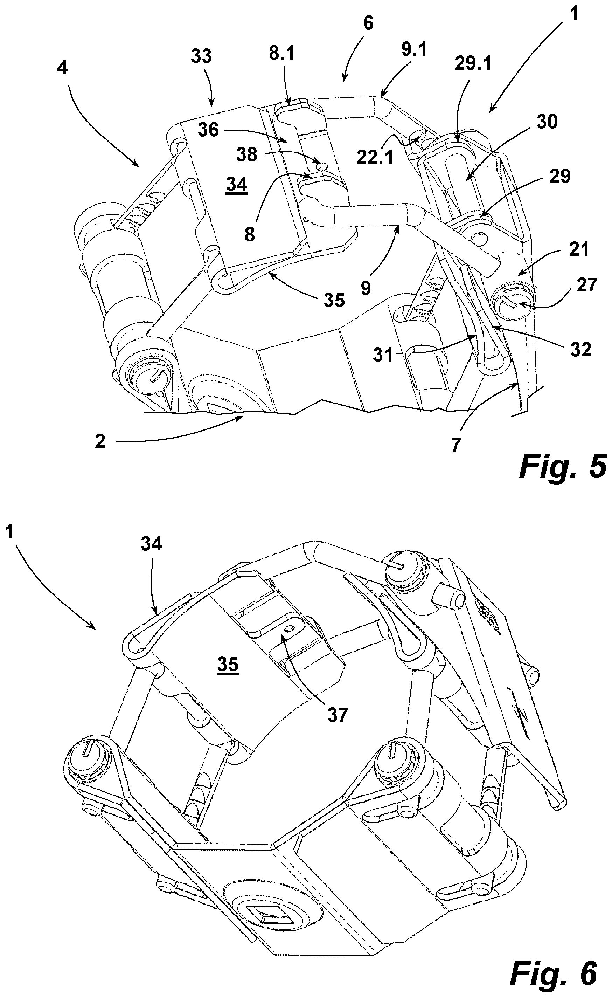

Durch die Schellensegmente 2, 3, 4 ist eine Langgutaufnahme 12 in Umfangsrichtung eingefasst. An den beiden sich parallel zur Langgutaufnahme 12 erstreckenden Enden des als Basissegment dienenden Schellensegmentes 2 sind die Schellensegmente 3, 4 gelenkig angeschlossen und zwar unter Ausbildung einer Gelenkschlaufe 13 durch eine entsprechende Umbiegung, deren Innenseite eine Schwenklagerfläche für eine darin gehaltene Gelenkhülse 14 bildet. Die Gelenkhülse 14 weist eine zylindrische Mantelfläche auf. Die Gelenkschlaufe 13 ist durch mehrere einzelne, in Richtung der Längsachse der Gelenkhülse 14 voneinander beabstandete Gelenkschlaufenstreifen gebildet, die bezüglich der Langgutaufnahme 12 an der Außenseite einer an die Bodenplatte 10 angeformten Seitenwand wieder zusammengeführt sind (siehe Figur 6). Angeschlossen ist das Schellensegment 3 mittels zweiter Anschlussstifte 15, 15.1 an die Gelenkhülse 14, indem diese jeweils eine quer zu ihrer Längserstreckung verlaufende Anschlussdurchbrechung 16, 16.1 durchgreifen. Die Anschlussstifte 15, 15.1 des Schellensegmentes 3 sind Teil eines U-förmig geformten ersten Schellensegmentteils 18, hergestellt aus einem Drahtabschnitt. Der die beiden Anschlussstifte 15, 15.1 als Schenkel dieses U-förmigen Schellensegmentteils 18 verbindende Steg 17 ist um seine Längsachse schwenkbar an ein zweites Schellensegmentteil 19 des Schellensegmentes 3 angeschlossen. Das aus einer Stahlblechplatine hergestellte zweite Schellensegmentteil 19 verfügt ebenfalls über eine in einer Umbiegung bereitgestellte Gelenkschlaufe 20, deren Innenseite die Schwenklagerfläche für den Steg 17 des ersten Schellensegmentteils 18 bereitstellt.

Die Anschlussstifte 15, 15.1 des Schellensegmentes 3 sind innerhalb der Gelenkhülse 14 gehalten. Das Schellensegment 4 ist bezüglich seines Anschlusses an das als Basissegment dienende Schellensegment 2 in gleicher Weise angeschlossen. Somit ist auch das Schellensegment 4 aus zwei Schellensegmentteilen zusammengesetzt.

Die Schenkel 9, 9.1 des Spannelementes 6 sind bei dem dargestellten Ausführungsbeispiel ebenfalls als Anschlussstifte konzipiert und durchgreifen eine von dem Spannhebel 7 gehaltene Gelenkhülse 21. Die Anschlussstifte der Schenkel 9, 9.1 sind ebenso wie die Anschlussstifte 15, 15.1 in der Gelenkhülse 21 fixiert. Der gelenkige Anschluss des Spannelementes 6 an die Gelenkhülse 21 und der Anschluss die ersten Schellensegmente 18 der Schellensegmente 3, 4 an die jeweilige Gelenkhülse 14 des Basissegmentes sind identisch ausgeführt.

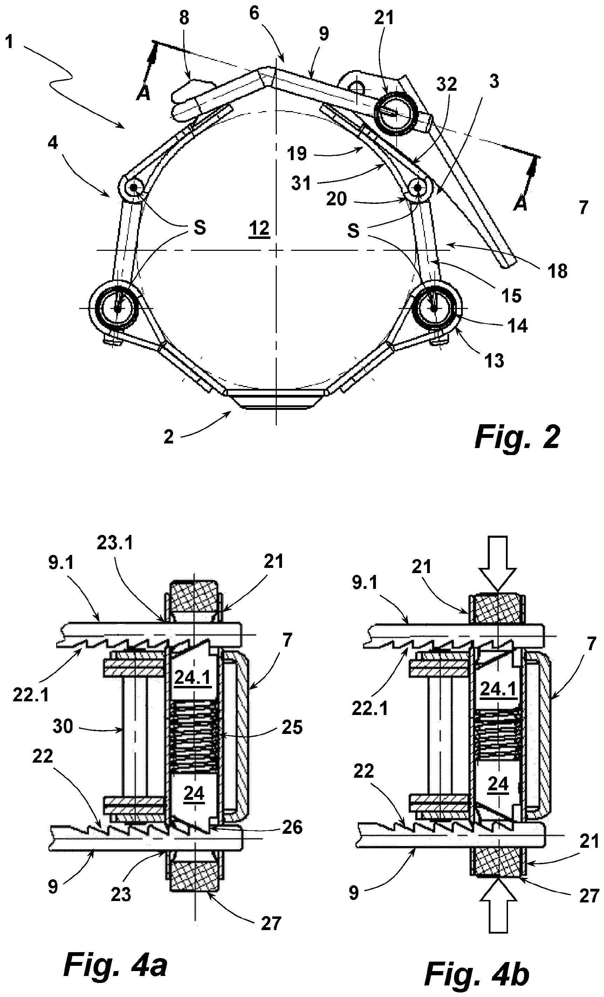

Die Langgutschelle 1 verfügt durch die Unterteilung der Schellensegmente 3, 4 in jeweils zwei Schellensegmentteile 18, 19 somit nicht nur über zwei gegenüber dem Schellensegment 2 gelenkig angeschlossene Schellensegmente 3, 4. Da die Schellensegmente 3, 4 jeweils bei dem dargestellten Ausführungsbeispiel in zwei Schellensegmente 18, 19 unterteilt sind, die wiederum gelenkig aneinander angeschlossen sind, erlaubt dieses eine besondere Anpassung der Kontur der Innenseite der Schellensegmente 3, 4 an ein oder mehrere in der Langgutaufnahme aufzunehmende und darin zu befestigende Langgüter. Die Schwenkachsen der die Langgutaufnahme 12 außenseitig einfassenden Bestandteile der Langgutschelle 1 sind in Figur 2 mit dem Bezugszeichen S kenntlich gemacht.

Die beiden Schellensegmente 3, 4 können ebenso wie das Spannelement 6 hinsichtlich ihrer effektiven Erstreckung und damit ihres Anteils an dem Umfang der Langgutaufnahme 12 gegenüber dem benachbarten Schellensegment eingerichtet werden. Dieses erfolgt über eine Einrichtung der Anschlussstifte 15, 15.1 des Schellensegmentes 3 gegenüber dem Schellensegment 2. Entsprechendes gilt für das Schellensegment 4 gegenüber dem Schellensegment 2 und das Spannelement 6 gegenüber dem Schellenelement 3. Die Einrichtbarkeit ist nachstehend anhand des gelenkigen Anschlusses des Spannelementes 6 an das Schellenelement 3 beschrieben. Die Einrichtbarkeit der Schellensegmente 3, 4 gegenüber dem als Basissegment dienenden Schellenelement 2 erfolgt in gleicher Weise.

Die Abschnitte der Schenkel 9, 9.1 als Anschlussstifte des Spannelementes 6 durchgreifen die an dem Spannhebel 7 gehaltene Gelenkhülse 21. Der Spannhebel 7 ist seinerseits gelenkig an dem Schellenelement 3 verschwenkbar als Übertotpunktspanner angelenkt. Dies bedeutet, dass bei geschlossenem Spannhebel 7 der Abstand der Schwenkachse der Gelenkhülse 21 vom Zentrum der Lageraufnahme 12 geringer ist als der Abstand der Schwenkachse des Spannhebels 7 und die beiden Schwenkachsen in Umfangsrichtung ebenfalls voneinander beabstandet sind, wobei die Schwenkachse des Spannhebels 7 einen geringeren Abstand zum Spannwiderlager aufweist als die durch die Gelenkhülse 21 gebildete Schwenkachse.

An den zueinander weisenden Seiten der durch die Schenkel 9, 9.1 bereitgestellten Anschlussstifte des Spannelementes 6 ist jeweils eine Rastzahnreihe vorgesehen (siehe Figur 4a). In dieser Figur sind die Rastzahnreihen mit den Bezugszeichen 22, 22.1 kenntlich gemacht. Die Rastzähne der Rastzahnreihen 22, 22.1 sind asymmetrisch ausgeführt. Die flache Flanke weist in Richtung zu dem Spannhebel 7 und somit in Einsteckrichtung der Schenkel 9, 9.1 mit ihren Anschlussstiftabschnitten in die Gelenkhülse 21. Die steile Flanke, die bei dem dargestellten Ausführungsbeispiel rechtwinklig zur Längserstreckung der Schenkel 9, 9.1 verläuft, weist in die entgegengesetzte Richtung und somit in Auszugsrichtung, in der die Schenkel 9, 9.1 aus den Anschlussdurchbrechungen 23, 23.1 der Gelenkhülse 21 herausgezogen werden können.

Innerhalb der Gelenkhülse 21 sind zwei Sperrglieder 24, 24.1 angeordnet. Zwischen den Sperrgliedern 24, 24.1 befindet sich eine Druckfeder 25. Diese ist vorgespannt, sodass durch die in der Druckfeder 25 gespeicherte Federkraft die Sperrglieder 24, 24.1 voneinander weggedrückt werden.

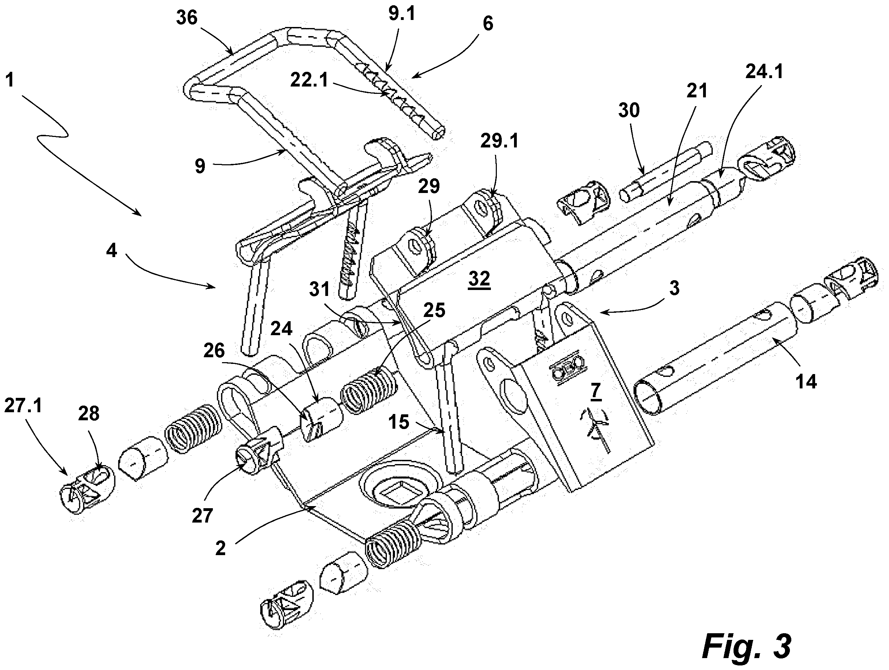

Die Sperrglieder 24, 24.1 sind identisch aufgebaut. Nachstehend ist das Sperrglied 24 beschrieben. Dieselben Ausführungen gelten ebenfalls für das Sperrglied 24.1. Das Sperrglied 24 ist innerhalb der Gelenkhülse 21 in Längserstreckung derselben verstellbar geführt und trägt an seinem zu der Rastzahnreihe 22 weisenden Stirnseite eine Verriegelungskontur 26, mit der diese in die Rastzahnreihe 22 eingreift. Die Kontur der Verriegelungskontur 26 entspricht derjenigen eines Zahnzwischenraumes. Dabei ist die Verriegelungskontur 26 mit einem Abschnitt auf der kurzen Flanke eines Zahnes abgestützt. Hierdurch ist eine Auszugsbewegung des Schenkels 9 aus der Gelenkhülse 21 blockiert. Eingeschoben werden kann der Schenkel 9 mit seinem Anschlussstiftabschnitt hingegen in die Anschlussdurchbrechung 23 hinein. Aufgrund der dann zusammenwirkenden Schrägflächen der Anschlusskontur 26 sowie der längeren Flanke der Rastzähne wird hierbei das Sperrglied 24 gegen die Rückstellkraft der Druckfeder 25 innerhalb der Gelenkhülse 21 verstellt. Insofern kann durch Eindrücken des Schenkels 9 die effektive Erstreckung des Spannelements 6 ausgehend von der in Figur 4a gezeigten Stellung reduziert werden. Dem Sperrglied 24 ist ein Stellglied 27 zugeordnet. Dieses ist ebenfalls in der Gelenkhülse 21 geführt und ragt stirnseitig aus der Gelenkhülse 21 heraus. Im Unterscheid zu dem aus einem Eisenmetall hergestellten Sperrglied 24 ist bei dem dargestellten Ausführungsbeispiel das Stellglied 27 ein Kunststoffspritzgussteil. Das Stellglied 27 dient zum Aufheben der in Figur 4a gezeigten Blockierung einer Auszugsbewegung des Schenkels 9 gegenüber der Gelenkhülse 21. Hierzu wird, wie in Figur 4b gezeigt, das Stellglied 27, welches mit seiner innerhalb der Gelenkhülse 21 befindlichen Stirnseite an dem Sperrglied 24 abgestützt ist, die Bewegungsblockierung, wie in Figur 4b gezeigt, aufgehoben. Eine Verstellung des Spannelements 6 gegenüber der Gelenkhülse 21 ist dann ohne weiteres möglich, auch zum Verkürzen der effektiven Erstreckung desselben. Das Stellglied 27 verfügt über eine quer zu seiner Bewegungsrichtung vorgesehene Durchbrechung 28, durch die der Schenkel 9 mit seinem Anschlussstiftabschnitt hindurchgreift. Diese Durchbrechung 28 ist in der Figur 3 aufgrund der Perspektive des Stellgliedes 27 anhand eines anderen Stellgliedes 27.1 erkennbar. Darin ist diese Durchbrechung mit dem Bezugszeichen 28 kenntlich gemacht. Durch diese Maßnahme ist das Stellglied 27 unverlierbarer Teil des Einrichtungsmechanismus zum Einrichten der effektiven Erstreckung des Spannelementes 6. Wie in Figur 3 erkennbar, ist die zu dem Sperrglied 24 weisende Stirnseite des Stellgliedes 27 schräg ausgeführt und an der längeren Flanke der Verriegelungskontur 26 abgestützt.

Wie aus Figur 3 erkennbar, erfolgt die Einrichtung der Schellensegmente 3, 4 gegenüber der von dem Schellensegment 2 jeweils gehaltene Gelenkhülse 14 in derselben Weise, wie dieses vorstehend bezüglich der Einrichtung der effektiven Erstreckung des Spannhebels 6 gegenüber dem Schellensegment 3 bzw. seinem zweiten Schellensegmentteil 19 beschrieben ist.

Die Explosionsdarstellung der Figur 3 verdeutlicht zudem den Anschluss des ersten U-förmig ausgeführten Schellensegmentteils 18 mit seinen Anschlussstiften 15, 15.1 an das zweite Schellensegmentteil 19. Das zweite Schellensegmentteil 19 trägt zwei nach außen abragende Lagerböcke 29, 29.1, an denen der Spannhebel 7 mittels eines Lagerzapfens 30 gelenkig angeschlossen ist. Die Folge der schlaufenartigen Ausbildung der Aufnahme für den Steg 17 des ersten Schellensegmentteils 18 ist das aus einer Blechplatine hergestellte zweite Schellensegmentteil 19 zumindest abschnittsweise doppellagig ausgeführt. Die innere, zur Langgutaufnahme 12 weisende Lage 31 ist in Anpassung an die gekrümmte Mantelfläche eines darin aufzunehmenden Langgutes konkav gekrümmt (siehe auch Figur 2). Die äußere Lage 32 ist hingegen ungekrümmt ausgeführt. Die Lagerböcke 29, 29.1 befinden sich an dem dem Schellensegmentteil 18 gegenüberliegenden Ende des zweiten Schellensegmentteils 19. Bereitgestellt sind diese durch jeweils einen Abschnitt aus jeder Lage 31, 32, sodass jeder Lagerbock 29, 29.1 letztendlich aus einem Lagerbockpaar gebildet ist. Damit wird die über den Spannhebel 7 übertragene Spannkraft gleichermaßen auf beide Lagen 31, 32 des zweiten Segmentteils 19 übertragen.

Die Anlenkung des Spannhebels 7 mittels des Lagerzapfens 30 an dem zweiten Segmentteil 19 ist, wie aus Figur 2 gut zu erkennen, ausgeführt, damit in der Geschlossenstellung des Spannhebels dieser durch eine Übertotpunktstellung gehalten ist. Hierbei dient die elastische Rückstellkraft des oder der in der Langgutaufnahme 12 enthaltenen Langgüter bei gespanntem Spannverschluss zur Aufrechterhaltung der in Figur 2 gezeigten Übertotpunktstellung. Wenn gewünscht, kann diese Stellung auch mit einer zusätzlichen Sicherung gesichert werden, etwa durch einen Sicherungssplint, der mit seinem einen Schenkel durch eine in eine Seitenwange des Spannhebels 7 eingebrachte Öffnung und mit seinem weiteren Schenkel benachbart zu dem Steg 17 des ersten Schellensegmentteils 18 in die Gelenkschlaufe 20 eingesteckt wird.

Die Ausbildung der beiden Lagerböcke 29, 29.1 als Spannbockpaare ist in Figur 5 erkennbar. Durch die außen liegende Lage 32 werden die beiden inneren Spannbockteile bereitgestellt, während die beiden außen liegenden Spannbockteile aus der inneren Lage 31 geformt sind.

Das Schellensegment 4, welches ebenso aufgebaut ist wie das Schellensegment 3 verfügt ebenfalls über ein doppellagig ausgeführtes Schellensegmentteil 33. Dieses Schellensegmentteil 33 trägt endseitig die Spannhakenpaare 8, 8.1. Jedes Spannhakenpaar 8, 8.1 ist durch ein Spannhakenteil der außen liegenden Lage 34 und der inneren Lage 35 gebildet. In der in Figur 5 gezeigten gespannten Stellung der Langgutschelle 1, die in dieser Stellung gegen die Mantelfläche eines oder mehrerer in die Langgutaufnahme 12 eingelegter Langgüter wirkt, fluchten die Kontaktflächen, an denen der die Spannhakenpaare 8, 8.1 hintergreifende Teil des Spannelementes anliegt, jedes Spannhakenteils eines Spannhakenpaares 8, 8.1 miteinander. Möglich ist eine Ausgestaltung des zweiten Schellensegmentteils 33 des Schellensegmentes 4 dergestalt, das bei nicht gespanntem Spannverschluss die Kontaktflächen, an denen das Spannelement 6 mit seinem Steg 36 anliegt nicht miteinander fluchten, und zwar dergestalt, dass die durch die obere Lage 34 bereitgestellten Spannhakenteile gegenüber denjenigen der unteren Lage 35 etwas in Öffnungsrichtung des Spannverschlusses 5 versetzt sind. Im Zuge des Spannens wird somit die obere Lage 34 gegenüber der unteren Lage in Spannrichtung verstellt, bis die in Figur 5 gezeigte Stellung der Spannhakenteile jedes Spannhakenpaares 8, 8.1 erreicht ist.

Bei dem in den Figuren dargestellten Ausführungsbeispiel ist vorgesehen, dass diese Stellung zusätzlich durch eine Rastung haptisch kenntlich gemacht ist. Zu diesem Zweck ist an die untere Lage ein Rastenfortsatz 37 angeformt, der an seiner zu der oberen Lage 34 weisenden Seite eine Rastnocke trägt. Die obere Lage 34 weist an komplementärer Stelle eine Rastvertiefung 38 auf. Das Einspringen der positiven Raststruktur des Rastfortsatzes 37 in die als Rastöffnung ausgeführte Rastvertiefung 38 ist beim Schließen der Langgutschelle 1 spürbar und zeigt einem Benutzer an, dass über die Schellensegmente 2, 3, 4 auf die Mantelfläche eines oder mehrerer in der Langgutaufnahme 12 befindlicher Langgüter eine hinreichende Spannkraft aufgebracht ist.

Die Erfindung ist anhand von Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

**Bezugszeichenliste**

| | | | |
|---|---|---|---|
| 1 | Langgutschelle | 34 | Lage |
| 2 | Schellensegment | 35 | Lage |
| 3 | Schellensegment | 36 | Steg |
| 4 | Schellensegment | 37 | Rastenfortsatz |
| 5 | Spannverschluss | 38 | Rastvertiefung |
| 6 | Spannelement | S | Schwenkachse |
| 7 | Spannhebel | | |
| 8, 8.1 | Spannhakenpaar | | |
| 9, 9.1 | Schenkel | | |
| 10 | Bodenplatte | | |
| 11 | Schraubenkopfaufnahme | | |
| 12 | Langgutaufnahme | | |
| 13 | Gelenkschlaufe | | |
| 14 | Gelenkhülse | | |
| 15, 15.1 | Anschlussstift | | |
| 16, 16.1 | Anschlussdurchbrechung | | |
| 17 | Steg | | |
| 18 | Erstes Schellensegmentteil | | |
| 19 | Zweites Schellensegmentteil | | |
| 20 | Gelenkschlaufe | | |
| 21 | Gelenkhülse | | |
| 22, 22.1 | Rastzahnreihe | | |
| 23, 23.1 | Anschlussdurchbrechung | | |
| 24, 24.1 | Sperrglied | | |
| 25 | Druckfeder | | |
| 26 | Verriegelungskontur | | |
| 27 | Stellglied | | |
| 28 | Durchbrechung | | |
| 29, 29.1 | Lagerbock | | |
| 30 | Lagerzapfen | | |
| 31 | Lage | | |
| 32 | Lage | | |
| 33 | Zweites Schellensegmentteil | | |

## Patentansprüche

1. Langgutschelle mit zumindest zwei eine Langgutaufnahme (12) einfassenden, gelenkig miteinander verbundenen Schellensegmenten (2, 3, 4) und mit einem ein gelenkig an einem der Schellensegmente (3) gehaltenes Spannelement (6) umfassenden Spannverschluss (5), wobei das Spannelement (6) bei geschlossener Langgutschelle (1) ein an dem benachbarten Schellensegment (4) befindliches Spannwiderlager hintergreift, **dadurch gekennzeichnet, dass** die effektive Erstreckung zumindest eines ersten Schellensegmentes (3, 4) oder des Spannelementes (6) in Bezug auf seinen Anteil an dem Außenumfang der Langgutaufnahme (12) einrichtbar ist, wobei die Einrichtung der effektiven Erstreckung des ersten Schellensegmentes (3, 4) gegenüber einem benachbarten zweiten Schellensegment (2, 3) an dem gelenkigen Anschluss, mit dem das erste Schellensegment (3, 4) gelenkig an das benachbarte Schellensegment (2, 3) angeschlossen ist, erfolgt.

2. Langgutschelle nach Anspruch 1, **dadurch gekennzeichnet, dass** zum Bereitstellen des gelenkigen Anschlusses zweier Schellensegmente (2, 3; 2, 4) und/oder des Spannelementes (6) an ein Schellensegment (3) ein an dem zweiten Schellensegment (2, 3) um seine Längsachse verstellbar gehaltenes Gelenkstück (14, 21) mit zumindest einer quer zu seiner Längsachse angeordneten Anschlussdurchbrechung (16, 16.1; 23, 23.1) vorgesehen ist, dass das erste Schellensegment (3, 4) bzw. das Spannelement (6) wenigstens einen eine Anschlussdurchbrechung (16, 16.1; 23, 23.1) des Gelenkstückes (14, 21) durchgreifenden Anschlussstift (15, 15.1) aufweist, und dass zum Einrichten der effektiven Erstreckung des den Anschlussstift (15, 15.1) tragenden Teils ein die Auszugslänge des Anschlussstiftes (15, 15.1) aus der Anschlussdurchbrechung (16, 16.1; 23, 23.1) begrenzender Einrichtungsmechanismus vorgesehen ist.

3. Langgutschelle nach Anspruch 2, **dadurch gekennzeichnet, dass** der Einrichtungsmechanismus nach Art einer Rastverriegelung ausgelegt ist, wobei der Anschlussstift (15, 15.1) an seiner Mantelfläche ein sich in Richtung seiner Längserstreckung erstreckende Rastzahnreihe (22, 22.1) trägt und der Einrichtungsmechanismus über ein lösbar gehaltenes Sperrglied (24, 24.1) verfügt, durch das, wenn mit einer Sperrkontur in die Rastzahnreihe (22, 22.1), insbesondere infolge einer darauf einwirkenden Federkraft, eingreifend, eine Auszugsbewegung des Anschlussstiftes (15, 15.1) blockiert ist.

4. Langgutschelle nach Anspruch 3, **dadurch gekennzeichnet, dass** das Gelenkstück als Gelenkhülse (14, 21) ausgeführt ist, in der das Sperrglied (24, 24.1) gegen die Rückstellkraft eines Federelementes (25) zum Freigeben einer Blockierung des Anschlussstiftes (15, 15.1) in längsaxialer Richtung verstellbar geführt ist.

5. Langgutschelle nach Anspruch 4, **dadurch gekennzeichnet, dass** dem Einrichtungsmechanismus ein stirnseitig aus der Gelenkhülse (14, 21) mit einem Betätigungsabschnitt herausragendes Stellglied (27) zum Lösen der Sperrstellung des Sperrgliedes (24, 24.1) gegenüber dem durch dieses in Bezug auf eine Auszugsbewegung blockierten Anschlussstift (15, 15.1) zugehörig ist.

6. Langgutschelle nach Anspruch 5, **dadurch gekennzeichnet, dass** das Stellglied (27) eine in Verstellrichtung mit ihrer Langachse ausgerichtete langlochartige Anschlussstiftdurchbrechung (28) aufweist, durch die der Anschlussstift (15, 15.1) hindurchgeführt ist.

7. Langgutschelle nach einem der Ansprüche 2 bis 6, **dadurch gekennzeichnet, dass** das Schellensegment (3, 4) bzw. das Spannelement (6) zwei parallel zueinander angeordnete Anschlussstifte (15, 15.1) trägt und das Gelenkstück (14, 21) zwei im Abstand der Anschlussstifte (15, 15.1) zueinander beabstandete Anschlussdurchbrechungen (16, 16.1; 23, 23.1) aufweist.

8. Langgutschelle nach Anspruch 7, **dadurch gekennzeichnet, dass** der Einrichtungsmechanismus auf beide Anschlussstifte (15, 15.1) wirkt und beide Anschlussstifte (15, 15.1) an ihrer jeweils zueinander weisenden Seite eine Rastzahnreihe (22, 22.1) sowie der Einrichtungsmechanismus in Bezug auf jeden Anschlussstift (15, 15.1) ein mit einer Rastzahnreihe (22, 22.1) in Eingriff stellbares Sperrglied (24, 24.1) aufweisen.

9. Langgutschelle nach Anspruch 8, **dadurch gekennzeichnet, dass** zwischen den beiden Sperrgliedern (24, 24.1) eine Rückstellfeder (25) angeordnet ist, durch die die Sperrglieder (24, 24.1) in ihrer Eingriffstellung in die jeweilige Rastzahnreihe (22, 22.1) gehalten sind.

10. Langgutschelle nach einem der Ansprüche 7 bis 9, **dadurch gekennzeichnet, dass** bei einem Schellensegment (3, 4) die beiden Anschlussstifte (15, 15.1) die Schenkel eines U-förmig geformten, ersten Schellensegmentteils (18) sind und der die beiden Anschlussstifte (15, 15.1) verbindende Steg (17) um seine Längsachse verstellbar an einem zweiten Schellensegmentteil (19) dieses Schellensegmentes (3, 4) gehalten ist, wodurch die beiden Schellensegmentteile (18, 19) gelenkig miteinander verbunden sind.

11. Langgutschelle nach einem der Ansprüche 7 bis 9, **dadurch gekennzeichnet, dass** bei dem Spannelement (6) die beiden Anschlussstifte die Schenkel eines U-förmig geformten Spannbügels sind und der die beiden Anschlussstifte verbindende Steg (33) bei gespannter Langgutschelle (1) das durch ein weiteres Schellensegment (4) bereitgestellte Spannwiderlager hintergreift.

12. Langgutschelle nach Anspruch 10 oder 11, **dadurch gekennzeichnet, dass** das zweite Schellensegmentteil (19, 33) eine unter Ausbildung einer Schwenklagerfläche durch eine Gelenkschlaufe (20) für den Steg (17) des ersten Schellensegmentteils (19) geformte Platine, insbesondere Blechplatine, ist, das zumindest über einen Abschnitt in Richtung der Erstreckung des Umfanges der Langgutaufnahme (12) doppellagig ausgeführt ist.

13. Langgutschelle nach Anspruch 12, **dadurch gekennzeichnet, dass** die die Doppellagigkeit bildenden Abschnitte dieses Schellensegmentteils (33) in ihrem von der Schwenklagerfläche wegweisenden Endabschnitt als Spannwiderlager bezüglich der Langgutaufnahme (12) jeweils außenseitig zumindest einen abragenden Spannhaken tragen, wobei bei gespannter Langgutschelle die Kontaktflächen der Spannhaken jeweils eines Spannhakenpaares (8, 8.1), an welchen Kontaktflächen das Spannelement (6) anliegt, miteinander fluchten.

14. Langgutschelle nach Anspruch 13, **dadurch gekennzeichnet, dass** dieses Schellensegment (4) zwei in Richtung der Längserstreckung der Langgutaufnahme (12) voneinander beabstandete Spannhakenpaare (8, 8.1) aufweist, wobei bei gespannter Langgutschelle (1) beide Spannhakenpaare (8, 8.1) von dem Spannelement (6) hintergriffen sind.

15. Langgutschelle nach Anspruch 13 oder 14, **dadurch gekennzeichnet, dass** in dem Abschnitt der Doppellagigkeit dieses Schellensegmentteils (33) eine Lage (35) einen in Richtung zu der anderen Lage (34) gerichteten Rastvorsprung trägt und die andere Lage eine Rastvertiefung (38) aufweist, wobei der Rastvorsprung bei gespannter Langgutschelle (1) in die Rastvertiefung (28) eingreift.

16. Langgutschelle nach einem der Ansprüche 1 bis 15, **dadurch gekennzeichnet, dass** die Langgutschelle (1) drei Schellensegmente (2, 3, 4) umfasst, von denen eines ein Basissegment ist, an das an seinen beiden in Umfangsrichtung der Langgutaufnahme (12) weisenden Enden gelenkig jeweils ein weiteres Schellensegment (3, 4) angeschlossen sind, von welchen eines das Spannelement (6) mit einem Spannhebel (7) und das andere das Spannwiderlager tragen.
